(19) **Europäisches Patentamt / European Patent Office / Office européen des brevets**

(11) **EP 1 719 260 B1**

(12) **EUROPEAN PATENT SPECIFICATION**

(45) Date of publication and mention of the grant of the patent:
**11.05.2011 Bulletin 2011/19**

(21) Application number: **05700641.3**

(22) Date of filing: **11.02.2005**

(51) Int Cl.:
***H04B 3/23*** *(2006.01)*

(86) International application number:
**PCT/DK2005/000091**

(87) International publication number:
**WO 2005/078950 (25.08.2005 Gazette 2005/34)**

(54) **DIGITAL ECHO CANCELLER**

DIGITALER ECHOLÖSCHER

DISPOSITIF D'EXTENSION DE LIGNE TELEPHONIQUE POUR TRANSFERT DE DONNEES PAR MODEM HAUTE VITESSE

(84) Designated Contracting States:
**AT BE BG CH CY CZ DE DK EE ES FI FR GB GR HU IE IS IT LI LT LU MC NL PL PT RO SE SI SK TR**

(30) Priority: **11.02.2004 DK 200400210**

(43) Date of publication of application:
**08.11.2006 Bulletin 2006/45**

(73) Proprietor: **RTX TELECOM A/S**
**9400 Norresundby (DK)**

(72) Inventors:
• **DALBY-JAKOBSEN, Jorgen**
**DK-9230 Svenstrup J (DK)**

• **LAURSEN, Morten**
**DK-9400 Norresundby (DK)**
• **MESSERSCHMIDT, Kent**
**DK-8900 Randers (DK)**
• **RANDBAEK, Jacob, Florian**
**DK-9530 Stovring (DK)**

(74) Representative: **Plougmann & Vingtoft A/S**
**Sundkrogsgade 9**
**P.O. Box 831**
**2100 Copenhagen Ø (DK)**

(56) References cited:
**CN-A- 1 315 801     US-A- 5 675 644**
**US-B1- 6 608 897**

Printed by Jouve, 75001 PARIS (FR)

## Description

### Field of the invention

The invention relates to the field of Telephone Line Extenders (TLEs). More specifically, the invention relates to TLEs for modem data transfer, such as V.34, V.90 or V.92 modem signals, at high modem speeds. The invention provides an echo canceller and a method for controlling an echo canceller. In addition, the invention relates to a Digital Signal Processor (DSP) system, a DSP executable algorithm, and a data frame structure. Still further, the Invention relates to a signal processing circuit, a TLE system, a TLE product and a pay-per-view settop box.

### Background of the invention

Modem-modem communication, or modem-telefax communication, comprises an analog modem connected to a Public Switched Telephone Network (PSTN) network for data transfer. For example pay-per-view cable TV and satellite TV have settop boxes that often use analog modems connected to Public Switched Telephone Network (PSTN) network for data transfer between a user and a service provider. Most often the settop box is wire connected to the PSTN network. However, in order to eliminate the wire connection between the settop box and the PSTN network a wireless connection may be desirable. In order for a pay-per-view system transaction system to function properly, a highly reliable connection is required, i.e. data corruption must be eliminated. In case of errors important data relating to validation of a user account etc. may be corrupted. Thus, demands to a communication link in such a pay-per-view system is quite strict. In addition, the modem speed required in such systems is normally 14.4 kbit/s or even higher.

If a wireless TLE system is desired, one possible solution for a wireless connection between a pay-per-view settop box and the PSTN network is to use standard DECT lines. However, using DECT lines with 8 kHz sampling frequency and a resolution of 8 bit a/u-law coding or 14 bit linear coding, modem signal speeds beyond 9.6 kbit/s can not be transferred reliably.

Thus, there is a need for technical solutions suitable for a Telephone Line Extender (TLE) system providing a wireless connection capable of achieving a reliable connection also at higher data transfer rates, such as with a modem speed of at least 14.4 kbit/s.

US 5,675,644 describes a method and appartus for canceling echo accounting for delay variations. The method and apparatus detects and corrects for variations in the flat delay, which permits smooth echo canceller operation even under dynamic delay conditions. If a shift in echo delay has occurred, then a signal indicating the mount of the shift is applied to an adaptive filterof the echo canceller and the filter taps are updated in accordance with the delay shift.

US 6,775,653 and CN-A-1 315 801 (both from the same patent family) describe a method and apparatus for performing double-talk detection with an adaptive decision threshold. The double-talk detector utilizes an adaptive decision threshold which is capable of tracking variations in the echo path and signal/noise levels during a call.

### Summary of the invention

In a first aspect the invention provides a method of processing a first and a second signal in an echo canceller according to appended claim 1.

Preferably said digital transmission is a wireless digital transmission, however it may be a wired digital transmission.

The method comprises the step of updating filter coefficients of the adaptive filter means. The method further comprises the step of deciding upon update of filter coefficients of the adaptive filter means in response to a detected frequency bandwidth of the first signal. Said step of deciding upon filter coefficient update may further comprises calculating a first level of the first signal and a second level of the second signal. Said step of deciding upon filter coefficients update may comprise detecting a level of the second delayed output signal and detecting a level of the added filter output signal and the delay output signal. Said step of updating filter coefficients may comprise calculating a filter update factor in response to a detected level of the first signal.

Further the invention provides a DSP executable algorithm adapted to perform the method according to the first aspect, and Further, a DSP system adapted to execute said algorithm according to the second aspect.

In a second aspect the invention provides an echo canceller according to appended claim 8.

The echo canceller comprises decision means for deciding upon update of filter coefficients of the adaptive filter.

Detector means may comprise a double-talk detector. A double-talk detection threshold of said double-talk detector may be controlled by dynamic control means. Said dynamic control means may comprise means for controlling the double-talk detection threshold in response to a predetermined size of an LMS error signal.

The echo canceller may further comprising means for calculating a first level of the first signal and a second level of the second signal. The decision means may be adapted to decide upon filter update in response to a ratio between said first and second levels.

The echo canceller further comprises a wide-band signal filter adapted to filter the first signal and to provide the wide-band signal filtered first signal to the decision means so as to allow filter coefficient update upon the wide-band signal filtered first signal exceeding a predetermined level.

The echo canceller may further comprise means for calculating a filter update factor in response to a level of the first signal.

The echo canceller may further comprise a ratio control unit adapted to calculate a difference between a level of the delay output signal and a level of the output signal from the summation means and to provide said difference to the decision means.

In preferred embodiments the echo canceller is implemented in a Digital Signal Processor (DSP).

Further, the invention provides a signal processing circuit comprising

- a codec part adapted for connection to an associated analog modem,

- an echo canceller according to the second aspect, and

- a digital interface adapted for transmission of digital signals.

In preferred embodiments, the digital interface is a digital air-interface adapted for wireless transmission of digital signals, however the digital interface may be a wired-interface adapted for wired transmission of digital signals.

Preferably the echo canceller receives signals from the codec part, and provide signals to the digital interface for digital transmission. Preferably the codec part is adapted to receive signals transmitted to the digital interface from said digital interface.

The connection to the associated analog modem may be formed by a 2-wire connection.

In embodiments comprising an air-interface, such air-interface preferably operates according to a DECT standard or derivatives thereof, or other types of systems based on digital communication, such as Bluetooth, Zig-bee, HomeRF or WLAN (802.11).

Further, the invention provides a signal processing circuit comprising an echo canceller inserted in a transmission path, the echo canceller comprising adaptive filter means being purely operable to those specific parts of incoming modem signals intended for use in controlling said echo canceller in order to prepare said incoming modem signals for digital transmission. Preferably the digital transmission is wireless, however it may be a wired digital transmission.

Further, the invention provides a data frame structure comprising two double slots, wherein each double slot comprises a standard DECT double slot, the DECT double slot having a B-field format comprising

- a header field,
- a header field protection field,
- a data field,
- a data field protection field, and
- a FEC field

In a preferred embodiment the data frame structure comprises three double slots. The three double slots may comprise first and second double slots for data and a third double slot for repetition of one of the first and second double slots. In another preferred embodiment the data frame structure comprises four double slots. The four double slots may comprise first and second data double slots and first and second double slots being repeated versions of the first and second data double slots.

The header field protection field and the data field protection field may be CRCs. Said CRCs may be standard DECT R-CRCs.

The FEC field may be a 32 bit ReedSolomon (100,96). Alternatively the FEC field has a length larger than 32 bit.

The data field may have a length of at least 200 bit. Preferably the data field has a length of 720 bit.

In a third aspect the invention provides a Telephone Line Extender system adapted for connection of an associated modem to an associated analog telephone plug, according to appended claim 21. The terms Fixed Part and Portable Part should be construed as declaratory terms only without any limiting effect. Other terms used in connection with TLEs are: Base Unit and Extension Unit, respectively. The Fixed Part may be fixed or stationary, while the Portable Part may be portable or non-stationary, however it may be chosen differently.

The exchange of data may comprise a data frame structure according to the seventh aspect. Codec parts of the Portable Part and the Fixed Part may be adapted to operate at a sample frequency of at least 8 kHz, such as at least 10 kHz.

The associated modem may be an analog modem or a digital modem.

The Telephone Line Extender System may further comprise modem cheating means adapted to manipulate signals in a negotiation with the associated modem. The modem cheating means serves to cheat or manipulate the associated modem to adjust its echo canceller in a different way than it would do by merely estimating a round-trip delay. The round-trip delay being defined as a time lapsed from a signal is sent from a first modem to a second modem and returned to the first modem. The modem cheating means serves to emulate a different value for the round-trip delay in order to substantially compensate for the presence of the TLE system itself in the communication path between a near-end and a far-end modem. The modem cheating means is preferably adapted to manipulate signals in phase 2 of the negotiation with the associated modem. The modem cheating means is preferably adapted to manipulate at least one of signals A and B with respect to their timing.

In one embodiment the Telephone Line Extender System transmits an inverted version of signal B a predetermined period after an inversion of signal A is present at the Fixed Part. This embodiment is adapted for operation in phase 2 of the V.34 protocol. Preferably, the predetermined period is within the interval 10-100 ms, preferably within 20-60 ms, more preferably within 30-50 ms, such as 40 ms.

In another embodiment prepared for V.90 operation, the Telephone Line Extender System transmits an inverted version of signal A a predetermined period after an inversion of signal B is present at the Fixed Part. This embodiment is adapted for operation in phase 2 of the V.34 protocol. Preferably, the predetermined period is within the Interval 10-100 ms, preferably within 20-60 ms, more preferably within 30-50 ms, such as 40 ms.

Preferably the Portable Part and the Fixed Part comprise means for wireless exchange of data. The Portable Part and the Fixed Part may alternatively comprise means for wireless exchange of data. In still another alternative, the Portable Part and the Fixed Part comprise means for wireless as well as wired exchange of data.

Further, the invention provides a Telephone Line Extender product comprising a Portable Part integrated with a modem, wherein the Portable Part is adapted for digital communication with an associated Fixed Part connected to an analog telephone plug. The digital communication may be a wireless digital communication or a wired digital communication, or a combination thereof.

Further, the invention provides a pay-per-view settop box comprising a Telephone Line Extender product according to the invention.

**Brief description of drawings**

In the following the invention will be described in details with reference to the accompanying figures, of which

Fig. 1 shows a block diagram of an example of a TLE system adapted for wirelessly connecting a modem and an analog telephone plug,

Fig. 2 shows a block diagram of one part of the TLE adapted for interfacing an analog modem signal to a digital wireless signal,

Fig. 3 shows a block diagram of an echo canceller part of the TLE system,

Fig. 4 shows a preferred data format structure for use in the digital communication involved in the TLE system,

Fig. 5 shows a preferred data format of a B-field of a DECT compatible double slot,

Fig. 6 shows a preferred format of the B-field header of Fig. 5,

Fig. 7 shows a block diagram of one part of the TLE system where buffers have been added to both TX and RX signal paths,

Fig. 8 shows a block diagram of an audio signal path in a preferred wireless TLE system comprising in its Portable Part (Extension Unit) a noise generator,

Fig. 9 shows, for the TLE system of Fig. 8, an example of phases 1-3 of a communication scheme in case of using the V.34 protocol,

Fig. 10 shows an example of a modem cheating procedure implemented in phase 2 of the V.34 protocol.

While the invention is susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the spirit and scope of the invention as defined by the appended claims.

Even though the embodiments in the following communicate wirelessly, it should be understood that the general principles according to the invention are valid also within embodiments that communicate via a wired connection.

**Detailed description of the invention**

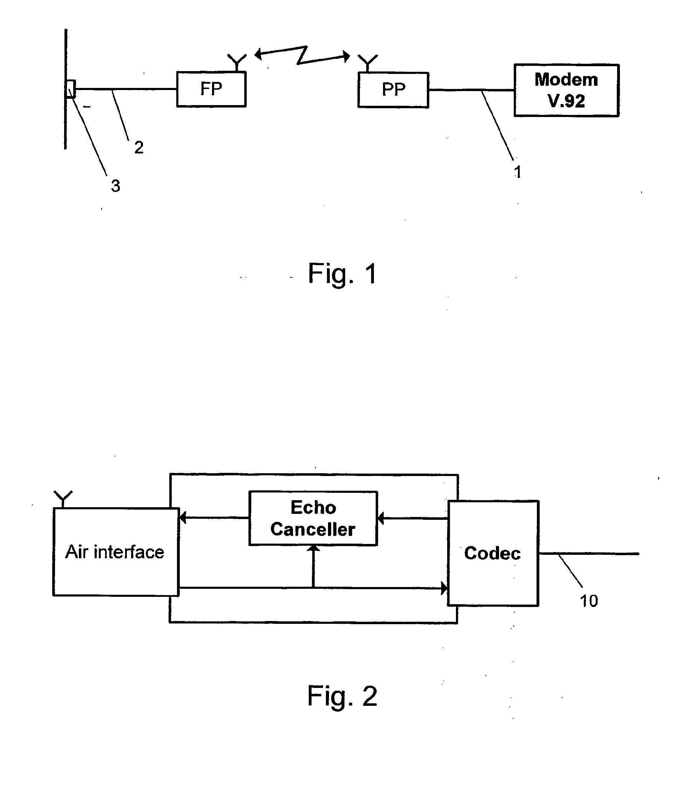

Fig. 1 shows a TLE system for wireless transfer of analog modem signals, such as for use in wireless connection of a pay-per-view settop box to the PSTN network. In Fig. 1 a V.92 type modem is connected by a standard 2-wire analog telephone connection 1 to a first wireless device, a portable part (PP) adapted for converting the analog modem signal to a digital wireless signal. A second wireless device, a fixed part (FP), is adapted to receive the digital wireless signal from the PP and to convert the received signal to an analog signal 2 and to provide this signal to the PSTN via an analog telephone plug 3.

Fig. 2 illustrates the principle of conversion from an analog modem signal 10 into a corresponding digital signal, which can be carried on a digital air-interface. In Fig. 2 the arrows indicate signal paths. The system is symmetric so the principles are valid for both the FP and PP parts even though illustrated for the PP part in Fig. 2. The signal transformation from analog to digital and from digital to analog, is done using a Codec running at a sampling frequency being at least 8 kHz. To achieve a higher transmission rate than with standard DECT formats the analog bandwidth of the Codec part must be above the standard 3.4 kHz, hence demanding a higher sampling frequency. A sampling frequency of 9 kHz provides adequate performance, but 10.3 kHz may be preferred. The resolution of the digital samples is preferably at least 14 bit linear, more preferably 16 bit linear. However, preferably the digital resolution is at level with standard digital telephone signals, namely 8 bit a/u-law coded or 14 bit linear coded. Still, a fair performance can still be achieved when decreasing the resolution by one or two bits. Using 12 bit resolution it is possible to obtain at least 14.4 kbit/s.

By introducing a digital signal path between two analog signals adds a delay. Using an air-interface based transmission, as in this case, adds to the delay and makes it too large for the echo cancellers of the connected modems to handle. This problem is solved by introducing digital echo cancellers where 2-line analog signals are converted to digital signals or vice-versa. The echo canceller is preferably implemented on digital signal processor (DSP) parts of the PP and the FP. As illustrated by the arrows in Fig. 2 only one signal path is interfered by the echo canceller. However, the echo canceller utilises both signal paths for the echo cancellation process.

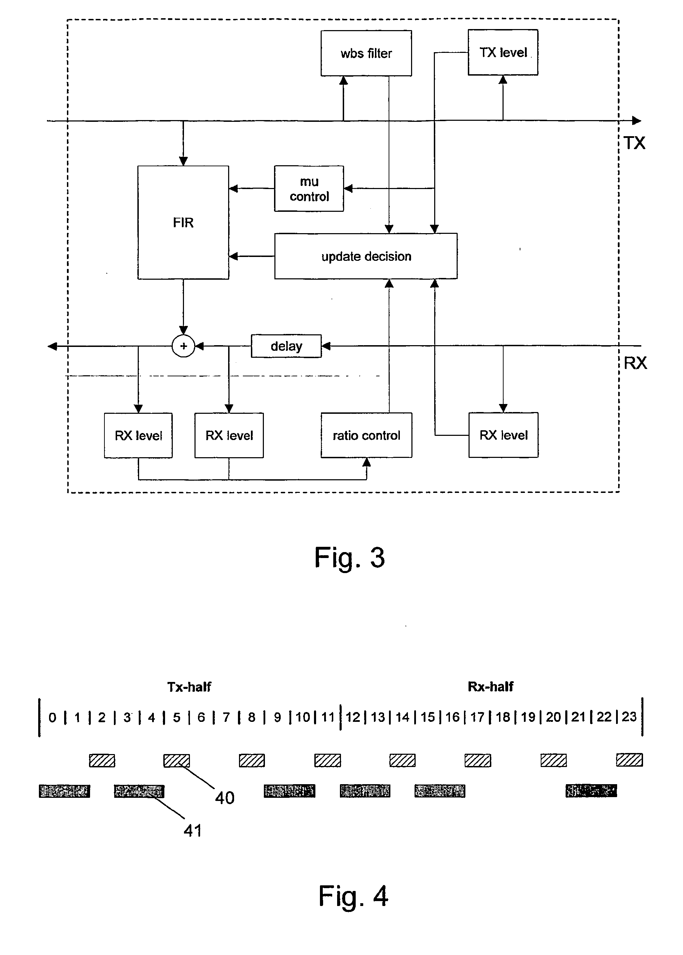

Fig. 3 illustrates the principles of a preferred echo canceller according to the invention. As seen in Fig. 3 the transmission signal path (TX) passes through the echo canceller, whereas the receiver (RX) signal path is delayed and added to an output of a an adaptive filter. The adaptive filter is implemented as a Finite Impulse Response (FIR) filter. An adaptive Least Mean Square (LMS) algorithm is used for controlling update of the FIR filter coefficients. A LMS error signal is used as part of the filter update process.

In order for the echo canceller to function properly with modem signals the echo canceller FIR filter only adapts to those specific parts of the modem signals intended for adjusting echo cancellers in the transmission path. These specific signals are broad bandwidth signals, such as white noise, transmitted only one way at a time. According to the invention these specific signals are detected by the echo canceller by using double-talk detectors and a wide band signal (wbs) filter. Using the wbs filter it is possible to detect for the presence of high frequency content of the TX signal and thus providing an indication of the presence of the specific echo canceller signals. A double-talk detection threshold is reduced dynamically with a size of the LMS error signal. The size of the LMS error signal is derived from comparing input and output of a LMS FIR filter summation point when no double-talk is present. As this error signal becomes smaller the double-talk decision threshold is reduced, and hereby the receive to transmit signal ratio of the echo canceller must be smaller to allow update of the FIR filter. This secures the FIR filter from loosing its correctly adapted coefficients by wrong update decisions.

In Fig. 3 the transmission (TX) signal passes through the unit unchanged. Still the TX signal is used for 1) signal input to the echo canceller FIR filter, 2) signal input to a wide-band-signal (wbs) filter, and for 3) TX signal level detection. The TX signal level is also used for scaling the FIR filter update factor, mu. This is so as to obtain the best possible performance from the echo canceller.

The receiving (RX) signal is processed by a short delay and by a summation point of the echo canceller. The summation point adds the delayed RX signal and an output signal from the FIR filter. The RX signal is also used as input to three different signal level detectors. A first RX signal level detector is positioned in the signal path before the delay, a second RX signal level detector is positioned between the delay and summation point, and a third RX signal level detector is positioned in the signal path after the summation point.

A ratio between RX and TX signal levels is used as input for a decision of whether the FIR filter coefficients can be updated or not. The actual value of the RX/TX ratio is calculated by a ratio control unit, based on the difference between RX signal levels before and after the summation point.

In addition to the echo cancelling principles described, a successful implementation requires fast signal detectors and careful trimming of parameters and levels.

Fig. 4 illustrates a preferred frame structure, where the connection is in normal condition using 3 double slots to support the required bandwidth. In Fig. 4 RF setup 40 and modem connection 41 are illustrated.

The digital air-interface is designed to support the bandwidth generated by the Codec when using a sampling rate of 10.3 kHz, i.e. 164.6 kbit/s. This bandwidth is achieved by using 3 double slots in each DECT frame, leaving a single slot for bearer handover and support of outgoing handset calls. To allow an implementation that does not require a zero-blindslot radio only slots 0, 3, 6 and 9 are supported by the FP.

The DECT air interface implementation must provide the system with an error free channel to avoid destroying performance of the modem, and support the bit-rate generated by the digital signal-processing unit. Errors in a digital channel occur as either bit errors or frame errors. To avoid bit errors all data is protected by CRC, and optionally with a Forward Error Correcting (FEC) code which will enable a receiver part to correct a number of bit errors.

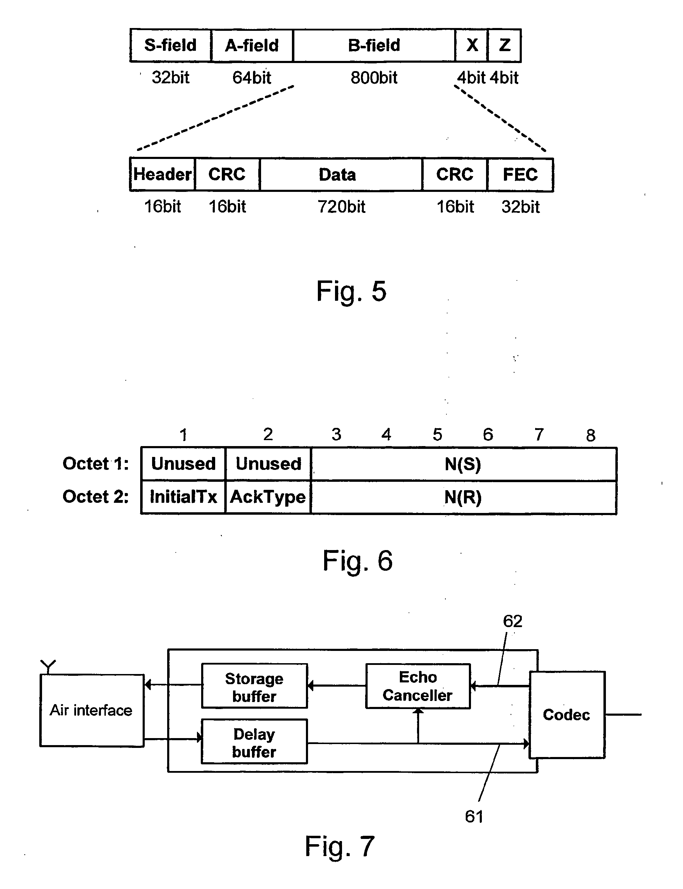

Fig. 5 illustrates a preferred data format using double slots. These are standard DECT double slot as specified in EN 300 175-2, with a dedicated B-field format. The S-, A-, X- and Z-fields are standard DECT implementations, as specified in EN 300 175-3.

A preferred B-field includes a 16 bit header field that is protected by a 16 bit CRC, and a 720 bit data field protected by both a 16 bit CRC and a 32 bit FEC code.

The 16 bit CRCs serving to protect the header and the data part of the B-field packet is using a standard DECT R-CRC as specified in EN 300 175-3, section 6.2.5.2 using the generating polynomial:

$$g(x) = x^{16} + x^{10} + x^8 + x^7 + x^3 + 1$$

The 32 bit FEC field is a ReedSolomon (100,96) based on the primitive polynomial:

$$p(x) = x^8 + x^4 + x^3 + x^2 + 1$$

and the generator polynomial:

$$g(x) = x^4 + \alpha^{76}x^3 + \alpha^{250}x^2 + \alpha^{79}x^1 + \alpha^7$$

Connection setup and release is using an Advanced A-field setup procedure for a multi-bearer connection as specified in the EN 300 175-3, and Encryption activation follow the standard multi-bearer encryption activation procedure.

A size of the FEC field is preferably selected according to the amount of signal processing power available for the DSP implementation. If possible with respect to the chosen chipset, the FEC field size is preferably larger than 32 bit.

Frame errors are minimized using a semi-dualslot diversity and an ARQ mechanism, which allows the system to retransmit lost frames. The B-field data field results in a connection bandwidth of 3x72 kbit/s = 216 kbits/s. The additional bandwidth compared to the system requirement of 164.6 kbit/s, is used for ARQ implementation to allow for retransmission in case of errors in the air transfer.

Fig. 6 shows a preferred format of the B-field header. To optimize the air-interface utilization all data is sent in 90 byte packets over the air-interface, and the N(S) field contains the sequence number of packet. AckType indicates a type of the N(R) field, which can be either SACK (Selective Acknowledgement) or ACK (Cumulative Acknowledgement), with the following coding: SACK: 1, and ACK: 0. ACK type indicates to the transmitter that all frames up to the value in N(R) have been received. SACK is used to acknowledge single packets, which occur when errors are present in the sequence of data. InitialTx bit is set when a packet with a specific sequence number is transmitted initially. Unused fields are set to zero.

Fig. 7 sketches a solution enabling support of retransmission. A delay buffer is implemented in the RX signal path 61, and a storage buffer is implemented in the TX signal path 62. The delay buffer is delaying the forwarding of data from the air-interface towards the DSP, and the storage buffer is used as data storage in case retransmission is required. A preferred buffer size is 100 ms for the storage buffer as well as for the delay buffer.

In the following preferred principles for data packet handling in reception is described. When a packet is received the FEC decoding is applied, and afterwards the header and data CRC fields are evaluated. If the header CRC is incorrect the packet is discarded, but if the header CRC is correct the data is stored in the RX buffer with the position determined by the N(S) value. If the data CRC is correct and all packets before the N(S) value contained in the packet have been received an updated ACK is transmitted. If the data sequence contains holes due to errors, a SACK is transmitted with the N(R) value set to the N(S) value just received.

When the receiver can determine that it is no longer possible to receive a packet in time to place it in the delay buffer, it shall acknowledge the packet by updating the cumulative Ack value and transmit this new value in N(R) field in the next ACK.

In the following preferred principles for data packet handling in transmission is described. Three types of transmissions are defined: Initial transmission, Retransmission and Idle transmission. The priority order between the transmission types is: 1) Retransmission, 2) Initial transmission, and 3) Idle transmission.

An Idle transmission is a retransmission of the last transmitted packet, and such Idle transmission only occurs if no new packet is available in the storage buffer in the TX signal path (see Fig. 7). The following rules apply for retransmissions:

A) Do not retransmit a packet on the same bearer as the last transmission of the specific packet
B) Do not initiate a new retransmit until the reply should have been received

An effect of the echo cancelling principles and the data format and data transmission schemes described is that it is possible to establish a wireless transmission which is more robust to interference to avoid bit errors. In addition, it is possible to obtain wireless transfer of analog modem signal with a data rate higher than what is possible by usage of standard DECT technology. Hereby the principles described are suitable for applications such as TV pay-per-view or a number of other applications requiring wireless transfer of classified data at a data transfer speed higher than provided by standard DECT technology.

The air-interface could optionally be based on 2.4 GHz (5.8 GHz) fast frequency hopping technique instead of DECT 1.9 GHz dynamic channel allocation. The air-interface may in principle be based on any suitable wireless technology.

The FP and PP can be configured to operate with different transmission power levels to optimise tradeoffs between range and interference into other equipment, such as a settop box of a pay-per-view system. Optionally, a transmission power level may be controlled by a manual switch or alternatively it may be controlled automatically.

A standard DECT handset may be registered to the FP. When this handset sets up a connection to the FP, the air-interface is switched to standard DECT audio format using 32kbit/s ADPCM based on 8 kHz sample rate. It may be implemented so that the handset connection has priority over modem connection.

If preferred, the PP may be integrated with the modem. In case of a pay-per-view system the PP could be integrated with the settop box. In case two or more settop boxes are used in one household, a communication link between the settop boxes may be established.

A TLE system according to the principles described is capable of providing reliable transfer of modem signal at speeds exceeding 33.6 kbit/s.

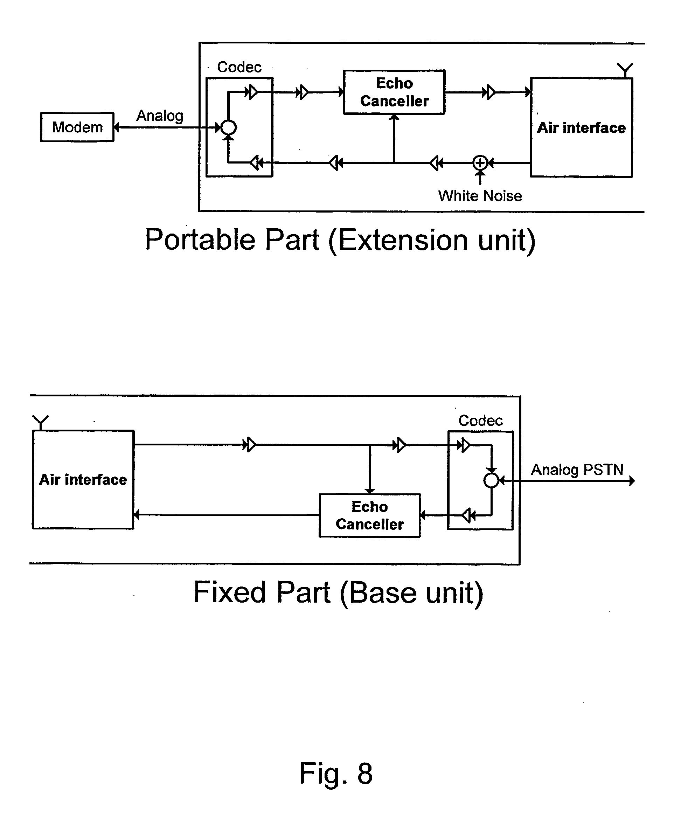

Fig. 8 shows diagrams of audio signal paths in a Portable Part or Extension Unit (PP) and a Fixed Part or Base Unit (FP) of a preferred TLE system adapted to transfer analog PSTN signals from V32bis, V.34 and V.90/92 modems. The PP and FP both comprise an air-interface adapted to handle their inter-communication. However, if preferred, the PP and FP may be inter-connected using a wired interface.

The FP is connected to a PSTN line, such as a wall plug, and the PP is connected to a modem. Both the FP and the PP comprise a 16 bit linear codec, an Echo canceller and an Air-interface part. For some applications it may be desired that the FP comprises in addition a suppressor. The PP comprises a noise generator, preferably adapted to generate substantially white noise. In a preferred embodiment, the codec is running at 9 kHz, limited by air-interface bandwidth, with a 16 bit resolution.

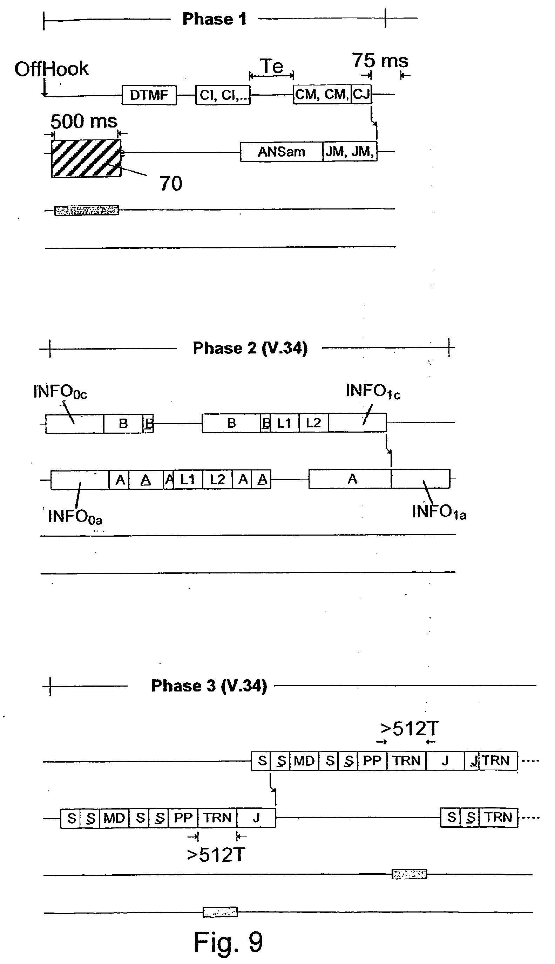

Fig. 9 illustrates, for the TLE embodiment of Fig. 8, phases 1-3 of a communication scheme. Phase 1 starts with "Offhook", i.e. the modem goes off-hook, and phases 2 and 3 are illustrated for an example where the V.34 protocol is used. "PP EC active" illustrates periods where the echo canceller in the PP is active, "FP EC active" illustrates periods where the echo canceller in the FP is active.

Signals A, B and their inverted versions A and B, according to the standards, are:

A: 2400 Hz tone + 1800 Hz guard tone
A: 2400 Hz tone (phase reversed, i.e. with its phase shifted 180 degrees) + 1800 Hz guard tone
B: 1200 Hz tone
B: 1200 Hz tone (phase reversed, i.e. with its phase shifted 180 degrees)

The echo cancellers in the system are only activated when white noise is detected, and are only running when the TRN signal is present during phase 3. In order to avoid echos looping in the system, the noise generator of the PP is used to generate a noise signal 70, preferably the noise signal 70 after the modem goes off-hook. Preferably the noise signal 70 comprises white noise and has a duration in the range 100-1000 ms, preferably in the range 300-700 ms, more preferably in the range 400-600 ms, most preferably 500 ms. Hereby, the echo canceller in the PP is pre-trained. The audio coming from the network (downlink audio) is opened after the noise signal 70, and if the modem is doing dial tone detect before dialling, the dialling will be delayed with the same time as the duration of the noise signal 70, i.e. such as 500 ms.

The modem in the head-end of the system uses a round-trip delay estimate measured during phase 2 of the modem (V.34 & V.90/92) negotiation to locate its echo canceller in the time domain. However, having introduced the TLE system in the communication path between first and second modems, either with a wireless or with a wired connection between the PP and the FP, the round-trip delay observed by the modem is no longer a valid measure of the echo location. This is due to the fact that the TLE system itself introduces an additional delay and due to the fact that the echo canceller in the PP removes echo from the modem. Thus, there is a need for a method of "cheating" the modem to adjust its echo canceller so as to compensate for the presence of the TLE system.

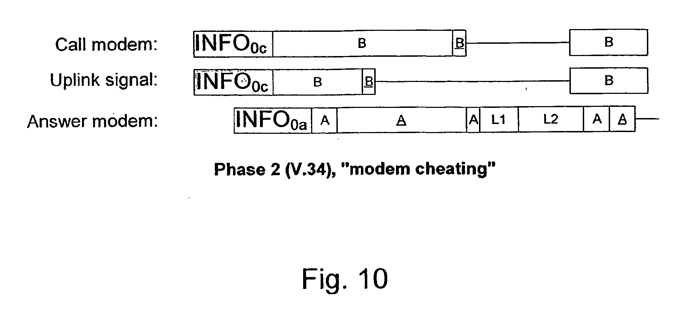

Fig. 10 shows an example of phase 2 of a V.34 communication in which the TLE system manipulates signals in order to "cheat" the modem to adjust its echo canceller so as to compensate for the presence of the TLE system. A, B, A and B are as indicated above. To cheat the head-end modem into locating its echo canceller in the correct position in the time domain, the TLE manipulates the B signals in phase 2 of the negotiation in order to "adjust" the round-trip delay estimate performed by the modem that consequently locates its echo canceller in response to the "adjusted" round-trip delay estimate.

In Fig. 10 the uplink signal is the signal sent by the FP. The cheating comprises manipulation of A and B signals in phase 2 of the negotiation. In case of V.34 mode, such as shown in Fig. 10, the cheating comprises inverting the B signal a predetermined period after the A signal inversion is present on the line, or is present in the FP. In the preferred embodiment, this predetermined period is 40 ms. In case of V.90 mode, the cheating comprises inverting the A signal when B signal inversion is present on the line, or is present in the FP.

The preferred embodiment illustrated in Figs. 8-10 is implemented without a delay buffer, i.e. it does hot provide ARQ retransmission. The reason is that the described modem cheating scheme does only operate properly in case of a system delay of less than approximately 50 ms. Preferably, the system delay is less than 40 ms. The reason is that round-trip delay is used to adjust timeout values in addition to echo canceller adjustment. Thus, if the modem is cheated to adjust its round-trip estimate to be much smaller than the actual delay, a timeout error will occur.

In case of a larger system delay, such as a system delay of 100 ms or more, modem cheating can not be applied. Thus, a poor uplink speed will result. However, by not applying modem cheating, ARQ retransmission can be applied, and thus an improved air-interface performance can be obtained.

## Claims

1. A method of processing a first (TX) and a second signal (RX) in an echo canceller, the method comprising the steps of:

   - providing the first signal (TX) to adaptive filter means (FIR) of the echo canceller and generate a filter output signal at least partly in response to said first signal (TX),
   **characterized in that** the method comprises
   - deciding upon update of filter coefficients of the adaptive filter means in response to a detected frequency bandwidth (wbs filter) of the first signal (TX), and wherein update of filter coefficients of the adaptive filter means (FIR) is performed only upon detecting presence of high frequency content of the first signal (TX),
   - providing the second signal (RX) to delay means (delay) so as to generate a delay output signal, and
   - adding the filter output signal and the delay output signal in order to prepare the second signal (RX) for digital transmission.

2. A method according to claim 1, wherein said step of deciding upon filter coefficient update further comprises calculating a first level of the first signal (TX) and a second level of the second signal (RX).

3. A method according to any of claims 2, wherein said step of deciding upon filter coefficients update comprises detecting a level of the second delayed output signal and detecting a level of the added filter output signal and the delay output signal.

4. A method according to any of the preceding claims, wherein said step of updating filter coefficients comprises calculating a filter update factor in response to a detected level of the first signal (TX).

5. A method according to any of the preceding claims, wherein said digital transmission is a wireless digital transmission.

6. A DSP executable algorithm adapted to perform the method according to any of claims 1-5.

7. A DSP system adapted to execute the algorithm according to claim 6.

8. An echo canceller for processing a first (TX) and a second signal (RX), the echo canceller comprising

   - adaptive filter means (FIR) for receiving the first signal (TX) and for providing a filter output signal at least partly in response to said received first signal (TX),
   - decision means (update decision) for deciding upon update of filter coefficients of the adaptive filter (FIR),
   **characterized in that** the echo canceller comprises
   - a wide-band signal filter (wbs filter) adapted to filter the first signal (TX) and to provide the wide-band signal filtered first signal to the decision means (decision update) so as to allow filter coefficient update upon a detected presence of high frequency content of the first signal (TX),
   - delay means (delay) in a signal path of the second signal (RX), said delay means providing a delay output signal, and
   - summation means (+) for adding the filter output signal and the delay output signal in order to prepare the second signal (RX) for digital transmission.

9. An echo canceller according to claim 8, wherein the adaptive filter means (FIR) comprises a FIR filter.

10. An echo canceller according to claim 8 or 9, wherein the adaptive filter means (FIR) comprises means for updating filter coefficients in response to an LMS error signal.

11. An echo canceller according to any of claims 8-10, wherein the adaptive filter means (FIR) comprises detector means for detecting that part of the first signal (TX) comprising information for updating filter coefficients.

12. An echo canceller according to claim 11, wherein the detector means comprises a double-talk detector.

13. An echo canceller according to claim 12, wherein a double-talk detection threshold of the double-talk detector is controlled by dynamic control means.

14. An echo canceller according to claim 13, wherein the dynamic control means comprises means for controlling the double-talk detection threshold in response to a predetermined size of an LMS error signal.

15. An echo canceller according to any of claims 8-14, further comprising means for calculating a first level of the first signal (TX) and a second level of the second signal (RX).

16. An echo canceller according to claim 15, wherein the decision means (decision update) is adapted to decide upon filter update in response to a ratio between said first and second levels (ratio control).

17. An echo canceller according to any of claims 8-16, further comprising means for calculating a filter update factor (mu control) in response to a level of the first signal (TX).

18. An echo canceller according to any of claims 8-17, further comprising a ratio control unit (ratio control) adapted to calculate a difference between a level of the delay output signal and a level of the output signal from the summation means and to provide said difference to the decision means (decision update).

19. An echo canceller according to any of claims 8-18, wherein the echo canceller is implemented in a DSP.

20. An echo canceller according to any of claims 8-19, wherein said digital transmission is a wireless digital transmission.

21. A Telephone Line Extender system adapted for connection of an associated modem (Modem V.92) to an associated analog telephone plug (3), the system comprising

   - a Portable Part (PP) adapted for connection to an the associated modem (Modem V.92), and
   - a Fixed Part (FP) adapted for connection to an the associated analog telephone plug (3),

   wherein the Portable Part (PP) and the Fixed Part (FP) comprise means for exchange of data,

**characterized in that** said means comprise an echo canceller according to any of claims 8-20.

**Patentansprüche**

1.  Verfahren zur Verarbeitung eines ersten (TX) und zweiten (RX) Signals in einem Echokompensator, wobei das Verfahren folgende Schritte umfasst:

    - Bereitstellen eines ersten Signals (TX) an adaptiven Filterelementen (FIR) des Echokompensators und Erzeugen eines Filterausgangssignals mindestens teilweise als Reaktion auf das erste Signal (TX),
    **dadurch gekennzeichnet, dass** das Verfahren umfasst
    - Entscheiden über das Aktualisieren von Filterkoeffizienten der adaptiven Filterelemente als Reaktion auf eine erfasste Frequenzbrandbreite (wbs filter) des ersten Signals (TX), und wobei das Aktualisieren von Filterkoeffizienten der adaptiven Filterelemente (FIR) nur nach Erfassen der Gegenwart eines Anteils an hohen Frequenzen im ersten Signal (TX) durchgeführt wird,
    - Bereitstellen eines zweiten Signals (RX) an Verzögerungselementen (delay) zum Erzeugen eines Verzögerungsausgangssignals, und
    - Addieren des Filterausgangssignals und des Verzögerungsausgangssignals zum Vorbereiten des zweiten Signals (RX) für die digitale Übertragung.

2.  Verfahren nach Anspruch 1, wobei der Schritt des Entscheidens über das Aktualisieren von Filterkoeffizienten weiterhin das Berechnen eines ersten Pegels des ersten Signals (TX) und eines zweiten Pegels des zweiten Signals (RX) umfasst.

3.  Verfahren nach Anspruch 2, wobei der Schritt des Entscheidens über das Aktualisieren von Filterkoeffizienten das Erfassen eines Pegels des zweiten verzögerten Ausgangssignals und das Erfassen eines Pegels des addierten Filterausgangssignals und des Verzögerungsausgangssignals umfasst.

4.  Verfahren nach einem der vorhergehenden Ansprüche, wobei der Schritt des Aktualisierens von Filterkoeffizienten das Berechnen eines Filteraktualisierungsfaktors als Reaktion auf einen erfassten Pegel des ersten Signals (TX) umfasst.

5.  Verfahren nach einem der vorhergehenden Ansprüche, wobei die digitale Übertragung eine drahtlose digitale Übertragung ist.

6.  DSP-ausführbarer Algorithmus, beschaffen zur Durchführung des Verfahrens nach einem der Ansprüche 1-5.

7.  DSP-System, beschaffen zur Ausführung des Algorithmus nach Anspruch 6.

8.  Echokompensator zum Verarbeiten eines ersten (TX) und eines zweiten Signals (RX), wobei der Echokompensator umfasst

    - adaptive Filterelemente (FIR) zum Empfangen des ersten Signals (TX) und zum Bereitstellen eines Filterausgangssignals mindestens teilweise als Reaktion auf das empfangene erste Signal (TX),
    - Entscheidungsmittel (update decision) zum Entscheiden über das Aktualisieren von Filterkoeffizienten der adaptiven Filterelemente (FIR),
    **dadurch gekennzeichnet, dass** der Echokompensator umfasst
    - ein Breitbandsignalfilter (wbs filter), beschaffen zum Filtern des ersten Signals (TX) und zum Bereitstellen des mit dem Breitbandsignalfilter gefilterten ersten Signals an dem Entscheidungsmittel (decision update) zum Ermöglichen einer Aktualisierung der Filterkoeffizienten nach Erfassen der Gegenwart eines Anteils an hohen Frequenzen im ersten Signal(TX),
    - Verzögerungsmittel (delay) in einem Signalweg des zweiten Signals (RX), wobei das Verzögerungsmittel ein Verzögerungsausgangssignal bereitstellt, und
    - Addiermittel (+) zum Addieren des Filterausgangssignals und des Verzögerungsausgangssignals zum Vorbereiten des zweiten Signals (RX) für die digitale Übertragung.

9.  Echokompensator nach Anspruch 8, wobei das adaptive Filtermittel (FIR) ein FIR-Filter umfasst.

**10.** Echokompensator nach Anspruch 8 oder 9, wobei das adaptive Filtermittel (FIR) Mittel zum Aktualisieren von Filterkoeffizienten als Reaktion auf ein LMS-Fehlersignal umfasst.

**11.** Echokompensator nach einem der Ansprüche 8-10, wobei das adaptive Filtermittel (FIR) Erfassungsmittel zum Erfassen des Anteils des ersten Signals (TX) mit Daten zum Aktualisieren von Filterkoeffizienten umfasst.

**12.** Echokompensator nach Anspruch 11, wobei das Erfassungsmittel einen Gegensprechdetektor umfasst.

**13.** Echokompensator nach Anspruch 12, wobei eine Erfassungsschwelle für Gegensprechsituationen des Gegensprechdetektors durch dynamische Steuermittel gesteuert wird.

**14.** Echokompensator nach Anspruch 13, wobei das dynamische Steuermittel Mittel zum Steuern der Erfassungsschwelle für Gegensprechsituationen als Reaktion auf eine vorgegebene Höhe eines LMS-Fehlersignals umfasst.

**15.** Echokompensator nach einem der Ansprüche 8-14, weiterhin umfassend Mittel zum Berechnen eines ersten Pegels des ersten Signals (TX) und eines zweiten Pegels des zweiten Signals (RX)

**16.** Echokompensator nach Anspruch 15, wobei das Entscheidungsmittel (decision update) beschaffen ist, eine Entscheidung über die Filteraktualisierung als Reaktion auf ein Verhältnis zwischen dem ersten und dem zweiten Pegel (ratio control) zu fällen.

**17.** Echokompensator nach einem der Ansprüche 8-16, weiterhin umfassend Mittel zum Berechnen eines Filteraktualisierungsfaktors (mu control) als Reaktion auf einen Pegel des ersten Signals (TX).

**18.** Echokompensator nach einem der Ansprüche 8-17, weiterhin umfassend eine Verhältnissteuereinheit (ratio control), beschaffen zum Berechnen eines Unterschieds zwischen einem Pegel des Verzögerungsausgangssignals und einem Pegel des Ausgangssignals des Addiermittels und zum Bereitstellen des Unterschieds an dem Entscheidungsmittel (decision update).

**19.** Echokompensator nach einem der Ansprüche 8-18, wobei der Echokompensator in einem DSP implementiert ist.

**20.** Echokompensator nach einem der Ansprüche 8-19, wobei die digitale Übertragung eine drahtlose digitale Übertragung ist.

**21.** Telephone-Line-Extender-System, beschaffen zum Anschluss eines verbundenen Modems (Modem V.92) an einen verbundenen analogen Telefonstecker (3), wobei das System umfasst

- ein tragbares Teil (PP), beschaffen zum Anschluss an das verbundene Modem (Modem V.92), und
- ein stationäres Teil (FP), beschaffen zum Anschluss an den verbundenen Telefonstecker (3),

wobei das tragbare Teil (PP) und das stationäre Teil (FP) Mittel für den Datenaustausch umfassen,
**dadurch gekennzeichnet, dass** die Mittel einen Echokompensator nach einem der Ansprüche 8-20 umfassen.


**Revendications**

**1.** Méthode de traitement d'un premier (TX) et d'un deuxième signal (RX) dans un annuleur d'écho, la méthode comprenant les étapes consistant à :

- fournir le premier signal (TX) à un moyen de filtrage adaptatif (FIR) de l'annuleur d'écho et générer un signal de sortie de filtre au moins partiellement en réponse au dit premier signal (TX),
**caractérisée en ce que** la méthode comprend les étapes consistant à
- décider de mettre à jour les coefficients de filtrage du moyen de filtrage adaptatif en réponse à une largeur de bande de fréquences (wbs filter) du premier signal (TX), où la mise à jour des coefficients de filtrage du moyen de filtrage adaptatif (FIR) n'est réalisée qu'en cas de détection de la présence d'une composante à haute fréquence dans le premier signal (TX),
- fournir le deuxième signal (RX) à un moyen retardateur (delay) de manière à générer un signal de sortie de retardateur, et

- additionner le signal de sortie de filtre et le signal de sortie de retardateur afin de préparer le deuxième signal (RX) pour la transmission numérique.

2. Méthode selon la revendication 1, dans laquelle ladite étape consistant à décider de mettre à jour les coefficients de filtrage comprend également le calcul d'un premier niveau du premier signal (TX) et d'un deuxième niveau du deuxième signal (RX).

3. Méthode selon la revendication 2, dans laquelle ladite étape consistant à décider de mettre à jour les coefficients de filtrage comprend la détection d'un niveau du deuxième signal de sortie retardé et la détection d'un niveau du signal de sortie de filtre et du signal de sortie de retardateur additionnés.

4. Méthode selon l'une quelconque des revendications précédentes, dans laquelle ladite étape de mise à jour des coefficients de filtrage comprend le calcul d'un facteur de mise à jour de filtre en réponse à un niveau détecté du premier signal (TX).

5. Méthode selon l'une quelconque des revendications précédentes, dans laquelle ladite transmission numérique est une transmission numérique sans fil.

6. Algorithme exécutable par un processeur de signal numérique adapté pour mettre en oeuvre la méthode selon l'une quelconque des revendications 1 à 5.

7. Système de processeur de signal numérique adapté pour exécuter l'algorithme selon la revendication 6.

8. Annuleur d'écho destiné à traiter un premier (TX) et un deuxième signal (RX), l'annuleur d'écho comprenant

- un moyen de filtrage adaptatif (FIR) destiné à recevoir le premier signal (TX) et à fournir un signal de sortie de filtre au moins partiellement en réponse au dit premier signal (TX) reçu,
- un moyen de décision (update decision) permettant de décider de mettre à jour les coefficients de filtrage du filtre adaptatif (FIR),
**caractérisé en ce que** l'annuleur d'écho comprend
- un filtre de signaux à large bande (wbs filter) adapté pour filtrer le premier signal (TX) et pour fournir le premier signal filtré par le filtre de signaux à large bande au moyen de décision (decision update) de manière à permettre la mise à jour des coefficients de filtrage en cas de détection de la présence d'une composante à haute fréquence dans le premier signal (TX),
- un moyen retardateur (delay) dans un trajet de signal du deuxième signal (RX), ledit moyen retardateur fournissant un signal de sortie de retardateur, et
- un moyen de sommation (+) destiné à additionner le signal de sortie de filtre et le signal de sortie de retardateur afin de préparer le deuxième signal (RX) pour la transmission numérique.

9. Annuleur d'écho selon la revendication 8, dans lequel le moyen de filtrage adaptatif (FIR) comprend un filtre FIR.

10. Annuleur d'écho selon la revendication 8 ou 9, dans lequel le moyen de filtrage adaptatif (FIR) comprend un moyen permettant de mettre à jour les coefficients de filtrage en réponse à un signal d'erreur LMS.

11. Annuleur d'écho selon l'une quelconque des revendications 8 à 10, dans lequel le moyen de filtrage adaptatif (FIR) comprend un moyen de détection permettant de détecter la partie du premier signal (TX) comprenant des informations destinées à mettre à jour les coefficients de filtrage.

12. Annuleur d'écho selon la revendication 11, dans lequel le moyen de détection comprend un détecteur de double parole.

13. Annuleur d'écho selon la revendication 12, dans lequel un seuil de détection de double parole du détecteur de double parole est contrôlé par un moyen de contrôle dynamique.

14. Annuleur d'écho selon la revendication 13, dans lequel le moyen de contrôle dynamique comprend un moyen permettant de contrôler le seuil de détection de double parole en réponse à un signal d'erreur LMS d'une taille prédéterminée.

**15.** Annuleur d'écho selon l'une quelconque des revendications 8 à 14, comprenant également un moyen permettant de calculer un premier niveau du premier signal (TX) et un deuxième niveau du deuxième signal (RX).

**16.** Annuleur d'écho selon la revendication 15, dans lequel le moyen de décision (decision update) est adapté pour décider de mettre à jour le filtre en réponse à un rapport entre lesdits premier et deuxième niveau (ratio control).

**17.** Annuleur d'écho selon l'une quelconque des revendications 8 à 16, comprenant également un moyen permettant de calculer un facteur de mise à jour de filtre (mu control) en réponse à un niveau du premier signal (TX).

**18.** Annuleur d'écho selon l'une quelconque des revendications 8 à 17, comprenant également une unité de contrôle de rapport (ratio control) adaptée pour calculer une différence entre un niveau du signal de sortie de retardateur et un niveau du signal de sortie provenant du moyen de sommation et pour fournir ladite différence au moyen de décision (decision update).

**19.** Annuleur d'écho selon l'une quelconque des revendications 8 à 18, dans lequel l'annuleur d'écho est mis en oeuvre dans un processeur de signal numérique.

**20.** Annuleur d'écho selon l'une quelconque des revendications 8 à 19, dans lequel ladite transmission numérique est une transmission numérique sans fil.

**21.** Système prolongateur de ligne téléphonique adapté pour le raccordement d'un modem associé (Modem V.92) à une fiche téléphonique analogique associée (3), le système comprenant

- une partie mobile (PP) adaptée pour être raccordée au modem associé (Modem V.92), et
- une partie fixe (FP) adaptée pour être raccordée à la fiche téléphonique analogique associée (3),

dans lequel la partie mobile (PP) et la partie fixe (FP) comprennent un moyen d'échange de données et, **caractérisé en ce que** ledit moyen comprend un annuleur d'écho selon l'une quelconque des revendications 8 à 20.

Fig. 1

Fig. 2

Fig. 3

Tx-half                                    Rx-half

| 0 | 1 | 2 | 3 | 4 | 5 | 6 | 7 | 8 | 9 |10|11|12|13|14|15|16|17|18|19|20|21|22|23|

40

41

Fig. 4

| S-field | A-field | B-field | X | Z |
|---------|---------|---------|---|---|
| 32bit | 64bit | 800bit | 4bit | 4bit |

| Header | CRC | Data | CRC | FEC |
|--------|-----|------|-----|-----|
| 16bit | 16bit | 720bit | 16bit | 32bit |

## Fig. 5

|  | 1 | 2 | 3 | 4 | 5 | 6 | 7 | 8 |
|---|---|---|---|---|---|---|---|---|
| Octet 1: | Unused | Unused | | | N(S) | | | |
| Octet 2: | InitialTx | AckType | | | N(R) | | | |

## Fig. 6

## Fig. 7

Portable Part (Extension unit)

Fixed Part (Base unit)

Fig. 8

**Phase 1**

OffHook

Te

75 ms

DTMF — CI, CI,... — CM, CM, CJ

500 ms

////// (70)

ANSam | JM, JM,

**Phase 2 (V.34)**

INFO$_{0c}$

B | B — B | B | L1 | L2 — INFO$_{1c}$

A | A | A | L1 | L2 | A | A — A — INFO$_{1a}$

INFO$_{0a}$

**Phase 3 (V.34)**

>512T

S | S | MD | S | S | PP | TRN | J | J | TRN ....

S | S | MD | S | S | PP | TRN | J — S | S | TRN ....

>512T

Fig. 9

Call modem:    $INFO_{0c}$ | B | B ———————— B

Uplink signal:    $INFO_{0c}$ | B | B ———————— B

Answer modem:    $INFO_{0a}$ | A | A | A | L1 | L2 | A | A —

**Phase 2 (V.34), "modem cheating"**

# Fig. 10

**EP 1 719 260 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5675644 A
- US 6775653 B
- CN 1315801 A